# EUROPEAN PATENT APPLICATION

(11) **EP 4 607 373 A1**
(43) Date of publication of application: **27.08.2025**
(21) Application number: 23878801.2
(22) Date of filing: 22.08.2023
(51) Int. Cl.: G06F 16/9535, G06F 16/958

(54) **MEDIA CONTENT RECOMMENDATION METHOD AND DEVICE**

(30) Priority: 20.10.2022 CN 202211289829
(71) Applicant: Beijing Zitiao Network Technology Co., Ltd., Beijing 100190 (CN)
(72) Inventor: LI, Yang, Beijing 100028 (CN); HU, Shun, Beijing 100028 (CN)
(74) Representative: Marks & Clerk LLP
(86) International application number: PCT/CN2023/114308
(87) International publication number: WO 2024/082806

(57) **Abstract**

Embodiments of the disclosure provides a method, a device, an electronic device, a medium, a computer program product, and a computer program for recommending media content, and the method includes: receiving a start instruction for a media interface of a target application; in response to the start instruction, displaying, on the media interface, a recommendation identification and a first amount of recommended media content corresponding to the recommendation identification, the recommended media content being preferred media content of a user, wherein for recommended media content subscribed by the user, a subscribed description is displayed on the media interface. According to the disclosure, the preferred media content of the user can be recommended on the media interface, and the recommended media content subscribed by the user is described, to cause the user to quickly find the recommended media content subscribed.

## Description

### CROSS-REFERENCING OF RELATED APPLICATIONS

The present application claims priority to Chinese Patent No. 202211289829.9, filed on October 20, 2022, and entitled "METHOD AND DEVICE FOR RECOMMENDING MEDIA CONTENT", the entirety of which is incorporated herein by reference.

### FIELD

Embodiments of the present disclosure relate to the field of image processing, and in particular, to a method, a device, an electronic device, a medium, a computer program product, and a computer program for recommending media content.

### BACKGROUND

The media content is content of at least one of: text, audio, or images. For example, music, podcasts, videos, and so on, may all be referred to as media content. In the related technology, a user may enter a media interface by an application. Media content of a plurality of themes may display on the media interface, and each theme corresponds to a plurality of media content. The user may click a certain theme, and then search the favorite media content under the theme.

It can be seen that the foregoing manner of finding the favorite media content by the user exists a problem of a long search path.

### SUMMARY

Embodiments of the present disclosure provide a method, a device, an electronic device, a medium, a computer program product, and a computer program for recommending media content, to overcome that a manner of finding the favorite media content by the user exists a problem of a long search path in the related technology.

In a first aspect, embodiments of the present disclosure provide a method for recommending media content, comprising: receiving a start instruction for a media interface of a target application; and in response to the start instruction, displaying, on the media interface, a recommendation identification and a first amount of recommended media content corresponding to the recommendation identification, the recommended media content being preferred media content of a user, wherein for recommended media content subscribed by the user, a subscribed description is displayed on the media interface.

In a second aspect, embodiments of the present disclosure provide a device for recommending media content, comprising:
a receiving unit configured to receive a starting instruction for a media interface of a target application; and
a displaying unit configured to in response to the start instruction, display, on the media interface, a recommendation identification and a first amount of recommended media content corresponding to the recommendation identification, the recommended media content being a preferred media content of a user, wherein for recommended media content subscribed by the user, a subscribed description is displayed on the media interface.

In a third aspect, embodiments of the present disclosure provide an electronic device, comprising: at least one processor and a memory;
the memory storing computer executable instructions;
the at least one processor executing thecomputer executable instructions stored in the memory, so that the at least one processor executes the method for recommending media provided by the first aspect.

In a fourth aspect, embodiments of the present disclosure provide a computer readable storage medium, the computer readable storage medium storing computer executable instructions, when a processor executes the computer executable instructions, implementing the method for recommending media content provided by the first aspect.

In a fifth aspect, according to one or more embodiments of the present disclosure, a computer program product is provided, comprising a computer program, wherein the computer program comprises computer executable instructions, and when a processor executes the computer executable instructions, implementing the method for recommending media content provided by the first aspect.

In a sixth aspect, according to one or more embodiments of the present disclosure, a computer program is provided, comprising computer executable instructions, when a processor executes computer executable instructions, implementing the method for recommending media content provided by the first aspect.

According to the method or device for recommending media content provided by this embodiment, by receiving a start instruction for a media interface of a target application; and in response to the start instruction, displaying, on the media interface, a recommendation identification and a first amount of recommended media content corresponding to the recommendation identification, the recommended media content being preferred media content of a user, wherein for recommended media content subscribed by the user, a subscribed description is displayed on the media interface, the preferred media content of the user can be recommended on the media interface, and the recommended media content subscribed by the user is described, to cause the user to quickly search for the recommended media content subscribed.

### BRIEF DESCRIPTION OF DRAWINGS

In order to more clearly illustrate embodiments of the present disclosure or the technical solutions in the related technology, the accompanying drawings need to be used in the description of embodiments or the related technology will be briefly introduced below, and it will be apparent that the drawings in the following descriptions are some embodiments of the present disclosure, and those skilled in the art may also obtain other drawings according to these drawings without creative labor.
FIG. 1 is an example diagram of an application scenario provided by embodiments of the present disclosure.
FIG. 2 is an example flowchart of a method for recommending media content provided by embodiments of the present disclosure.
FIG. 3 is an example diagram of a predetermined typography manner provided by embodiments of the present disclosure.
FIG. 4 is an example diagram of a page provided by embodiments of the present disclosure.
FIG. 5 is an example diagram of a media interface provided by embodiments of the present disclosure.
FIG. 6 is an example diagram of another media interface provided by embodiments of the present disclosure.
FIG. 7 is a block diagram of a structure of a device for recommending media content provided by embodiments of the present disclosure.
FIG. 8 is a schematic diagram of a hardware structure of an electronic device provided by embodiments of the present disclosure.

### DETAILED DESCRIPTION

In order to make the objectives, technical solutions and advantages of embodiments of the present disclosure clearer, the technical solutions in embodiments of the present disclosure will be clearly and completely described below with reference to the accompanying drawings in embodiments of the present disclosure. Obviously, embodiments described are a part of embodiments of the present disclosure, rather than all embodiments. Based on embodiments of the present disclosure, all other embodiments obtained by those skilled in the art without creative labor belong to the protection scope of the present disclosure.

In the related technology, if a user needs to search for favorite media content, the user needs to search by a long path. For example, for music, a common recommendation method is to recommend a plurality of music to a user according to a singer or other manners. If a user prefers music a of a singer A, music b of a singer B, and music c of a singer C, then the user needs to search for corresponding songs under different singers respectively, which exists a problem of long search path. In a further example, for a podcast, a multi-episode podcasts corresponding to the recommended theme are often recommended to the user, and the user selects a preferred podcast from the multi-episode podcasts, for example, the user enters the podcast interface, and a plurality of podcast themes are displayed on the podcast, such as "music podcast", "star podcast" and the like. If the user triggers the "star A" under the "star podcast", then the podcasts of a plurality of titles of the "star anchor A" are displayed, and the user also needs to select the favorite podcast to listen according to the title, so that the problem of user searching for the favorite podcast exists a long path length may be found.

In order to solve the foregoing problems, embodiments of the present disclosure provides a method for recommending media content, by receiving a start instruction for a media interface of a target application; and in response to the start instruction, displaying, on the media interface, a recommendation identification and a first amount of recommended media content corresponding to the recommendation identification, the recommended media content being preferred media content of a user, wherein for recommended media content subscribed by the user, a subscribed description is displayed on the media interface, the preferred media content of the user can be recommended on the media interface, and the recommended media content subscribed by the user is described, to cause the user to quickly search for the recommended media content subscribed.

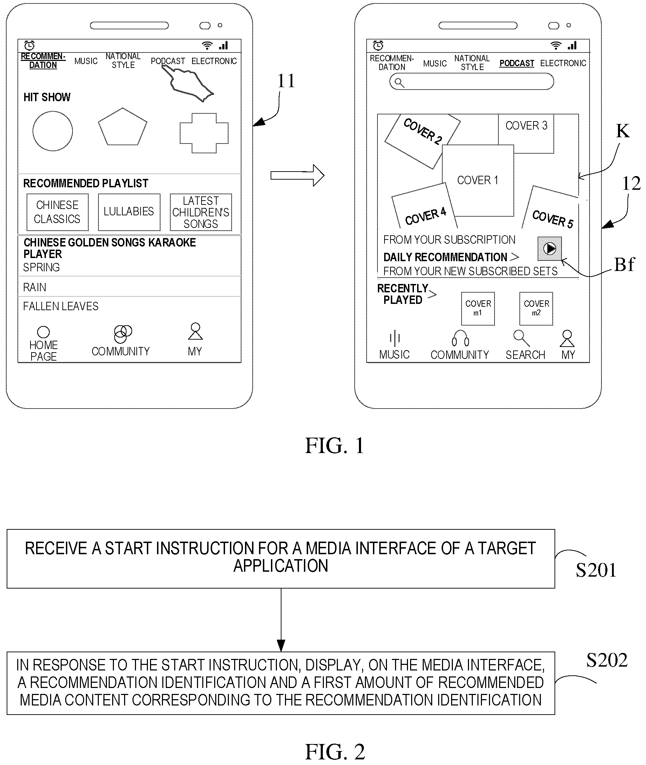

Referring to FIG. 1, FIG. 1 is an example diagram of an application scenario provided by embodiments of the present disclosure. As shown in FIG. 1, embodiments of the present disclosure may be applied to a recommended scenario of media content. In this scenario, the user may trigger the application identification of the target application on the desktop of the terminal device, to enter the home page 11 of the target application, and the target application is, for example, a music application, then the content recommended by the music application is displayed on the home page 11, and then the user may trigger a start instruction of the media interface. For example, the media interface 12 is a podcast interface, then the user may trigger a "podcast" control on the home page 11, and then enter the podcast interface. A recommended identification (daily recommendation) and a first amount (5 as shown in FIG. 1) of podcast shows are displayed on the podcast interface, and the podcast show may be displayed with a cover for recommending to the user.

The foregoing application scenario is only one of the scenario examples, and embodiments of the present disclosure may also be applicable to various recommendation scenarios of media content, such as recommendation of video, recommendation of music, and the like, which is not limited herein.

FIG. 2 is a schematic flowchart of a method for recommending media content provided by embodiments of the present disclosure. As shown in FIG. 2, the method for recommending media content includes steps S201 to S202.

S201: receive a start instruction for a media interface of a target application.

The target application may be any application that may enter a media interface, such as a music application, a video application, or the like. The media interface may be a home page of the target application, or may be a subpage of the target application, which is not limited herein.

In embodiments of the present disclosure, to illustrate an example of the media content being a podcast, the media interface is a podcast interface, then the podcast show is recommended on the podcast interface. Specifically, the podcast refers to a kind of self-service digital broadcast, essentially a kind of audio, and the user may choose the content and time of the podcast to listen.

As an example, referring to FIG. 1, the user triggers a "podcast" control on the home page 11 to input a start instruction of the podcast show to the terminal device.

S202: in response to the start instruction, display, on the media interface, a recommendation identification and a first amount of recommended media content corresponding to the recommendation identification.

Specifically, in response to the start instruction, a media interface is displayed on a screen of the terminal device, and the media interface includes: a recommendation identification and a first amount of recommended media content corresponding to the recommendation identification. For example, the media interface is a podcast interface, then media content is recommended, such as recommending podcast show.

Further, each recommended media content may be one subject media content, or may be an episode of media content, and one subject media content may include multiple episodes of media content. For example, for a video, one subject media content may be "TV series xx", an episode of media content may be "the second episode, yy" of television series XX, where "xx" may represent the name of the television series, "yy" may represent a brief description of the second episode, and for podcasts, one subject media content may be "heal anxiety", an episode of media content may be "the first episode, where does the anxiety come from", or "the second episode, how to relieve anxiety through exercise" under the "heal anxiety"

The recommended media content is the preferred media content of the user, and the subscribed description is displayed on the media interface for the recommended media content subscribed by the user. The user is a current login user of the target application, and the preferred media content includes: recommended media content subscribed by the user or media content preferred by the user that is determined according to the historical operation of the user.

In embodiments of the present disclosure, the subscribed description is "from your subscription" as shown in the media interface 12 of FIG. 1, and in FIG. 1, "from your subscription" may represent that all the first amount of recommended media content is from the subscription of the user.

In an optional embodiment, referring to FIG. 1, displaying a recommendation identification and a first amount of recommended media content corresponding to the recommendation identification on the media interface includes: displaying a target card K on a media interface, where the target card K includes a cover of the first amount of recommended media content and the recommendation identification displayed based on a predetermined typography manner.

Referring to FIG. 1, the recommendation identification is "daily recommendation", the first amount is predetermined, and as shown in FIG. 1, the first amount is 5, and the recommended media content is displayed on the target card K in the form of a cover, for example, the cover 1 to the cover 5, to achieve the recommendation of the media content.

In embodiments of the present disclosure, the target card is displayed at the main position of the media interface, as shown in FIG. 1, after entering the media interface 12, the target card is displayed at the main position of the media interface 12, and the main position may be seen first by the user. In addition, recommendation in other manners may be under the target card, for example, according to a leaderboard, a theme or a type. As shown in FIG. 1, recently listening may be the podcast content that the user recently listened to.

The predetermined typography manner includes: a cover of one of recommended media content is displayed at a central position in the target card, and a cover of other recommended media content is displayed at a peripheral position of the target card.

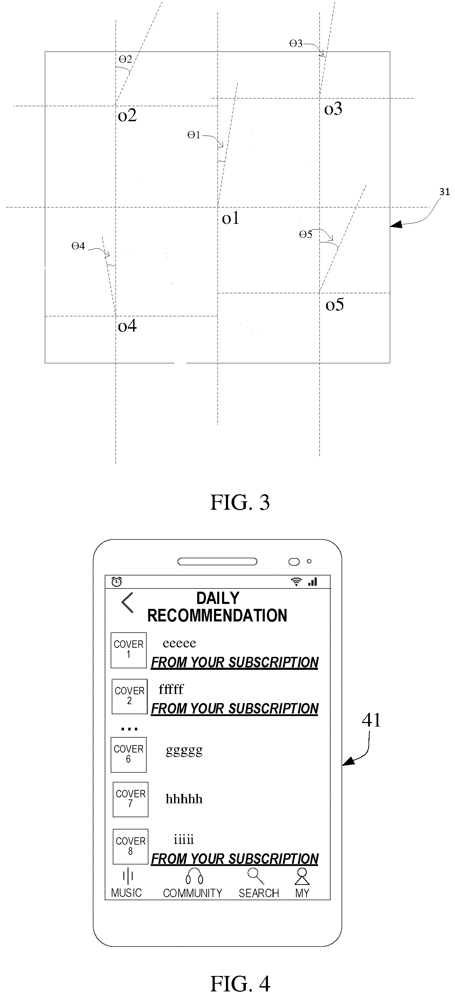

As an example, referring to FIG. 3, the target card 31 is rectangular, and a cover of the recommended media content is also rectangular, where the center of the cover of the recommended media content overlaps the center O1 of the target card, and the cover is rotated clockwise by an angle θ1, such as 5 °, relative to the vertical axis of the target card. A cover of the recommended media content is set at top-left of the central position of the target card 31, for the center O2 of the cover of the recommended media content, the cover is rotated clockwise by an angle θ2, such as 15 °, relative to the vertical axis of the target card. A cover of a recommended media content is set at top-right of the central position of the target card 31, for the center O3 of the cover of the recommended media content, the cover is rotated clockwise by an angle θ3, such as 5 °, relative to the vertical axis of the target card. A cover of the recommended media content is set at bottom-left of the central position of the target card 31, for the center O4 of the cover of the recommended media content, the cover is rotated anticlockwise by an angle θ4, such as 5 °, relative to the vertical axis of the target card. A cover of a recommended media content is set at bottom-right of a central position of the target card 31, for a center O5 of a cover of the recommended media content, the cover is rotated clockwise by an angle θ4, such as 15 °, relative to the vertical axis of the target card. In embodiments of the present disclosure, the rotation angle of the cover of the recommended media content relative to the vertical axis of the target card is set, so that the dynamic correlation of the target card can be improved.

The central position and the size of each cover are predetermined, and the position and the size of the cover are represented with pixels. Coordinate of the central position of the other cover is located with the central position of the target card as the coordinate origin. Moreover, the size of the cover at the central position is larger than the size of the periphery cover, and in addition, the size of the cover at the periphery may be set to be consistent. For example, the coordinate of O1 is (0, 0), and the corresponding cover size is 136 × 136. The coordinate of O2 is (-100, 83), and the corresponding cover size is 112 × 112. The coordinate of O2 is (-100, 83), and the corresponding cover size is 112 × 112. The coordinate of O3 is (89, 100), and the corresponding cover size is 112 × 112. The coordinate of O4 is (-100, -83), and the corresponding cover size is 112 × 112. The coordinate of O5 is (131, -57), and the corresponding cover size is 112 × 112.

Optionally, the target card includes a recommended region and other regions set below the recommended region, where the cover of the recommended media content is displayed in the recommended region, and "subscribed description", "recommendation identification" and "playback control" are displayed in other regions. Referring to FIG. 1, the region where the cover of the recommended media content is located is a recommended region, and the cover of the recommended media content in the recommended region may be displayed in a predetermined typography manner. The region below the recommended region is another region.

In embodiments of the present disclosure, the predetermined typography manner may also be another typography manner, which is not limited herein.

Furthermore, the method further includes: displaying the subscribed description at a predetermined position of the target card, the subscribed description representing that the first amount of recommended media content is the subscribed media content, and the predetermined position and the cover not overlapping.

Referring to FIG. 1, the subscribed description may be "from your subscription", where the subscribed description may be set at any location of the card where the cover does not overlap, and the predetermined location may be a periphery of the recommended region, and the user is caused to understand that all the first amount of recommended media content is media content subscribed by the current login user.

In addition, referring to FIG. 1, the target card further includes a playback control Bf, and wherein after in response to the start instruction, displaying, on the media interface, a recommendation identification and a first amount of media content corresponding to the recommendation identification, the method further includes: receiving a first operation instruction for the playback control; and in response to the first operation instruction, playing recommended media content corresponding to the recommendation identification based on a predetermined order.

Specifically, the user may trigger the playback control Bf, and then the first amount recommended media content is played according to the predetermined order, for example, the recommended media content corresponding to the cover 1 is played first, then the recommended media content corresponding to the cover 2 is played, and the recommended media content corresponding to the cover 3 is played, and the recommended media content corresponding to the cover 4 is played, then the recommended media content corresponding to the cover 5 is continued to play, and if the first amount of recommended media content is played already, the other recommended media content corresponding to the recommendation identification may be played.

In embodiments of the present disclosure, the recommendation identification may correspond to a second amount of recommended media content, and the first amount of recommended media content with a higher user preference is selected from the second amount of recommended media content to be displayed on the media interface. The determination of the user preference of the recommended media content is not limited.

Further, after in response to the start instruction, displaying, on the media interface, a recommendation identification and a plurality of recommended media content corresponding to the recommendation identification, the method further includes: receiving a second operation instruction excluding the playback control in the target card; and in response to the second operation instruction, displaying a second amount of recommended media content based on a list manner, the second amount being greater than the first amount.

Referring to FIG. 1 and FIG. 4, in addition to the playback control Bf, the user may trigger any position of the target card K, to jump to the page 41, and a second anount of recommended media content under the recommendation identification is displayed on the page 41. For example, 8 recommended media content is displayed, where the recommended media content is displayed in a cover and title manner. The second amount of recommended media content displayed includes the first amount of recommended media content.

In one embodiment, referring to FIG. 1, the subtitle may be displayed on the target card K to describe the source of the recommended media content, for example, the subtitle is "from your new subscribed sets". For example, the user subscribes media content of a subject, and the media content of the subject is updated according to a period, then the recommended media content may be a latest updated episode of media content in the media content of the subject subscribed by the user. The first amount of recommended media content in the target card may be the latest episode of media content updated in the media content from the different subscribed subjects, which is recommended to the user.

The recommended media content in the target card is preferentially media content subscribed by the user and recently played, but unfinished. Media content that has exceeded a threshold, such as 85%, is not recommended at the media interface.

Further, for the recommended media content subscribed by the user, the annotation of the subscribed description is added, as in FIG. 4, "from your subscription", where the display mode of the subscribed description is different from the display mode of the title, for example, colors and/or font styles are different, to prompt the user that the recommended media content is the media content subscribed by the user. In addition, the title of the recommended media content is "eeeee", "fffff", "ggggg", etc., as shown in FIG. 4.

In another optional embodiment, displaying, on the media interface, a recommendation identification and a first amount of recommended media content corresponding to the recommendation identification includes: displaying the recommendation identification on the media interface, and displaying, under the recommendation identification, the first amount of recommended media content in a list form, the recommended media content comprising: a cover of the recommended media content and a title of recommended media content.

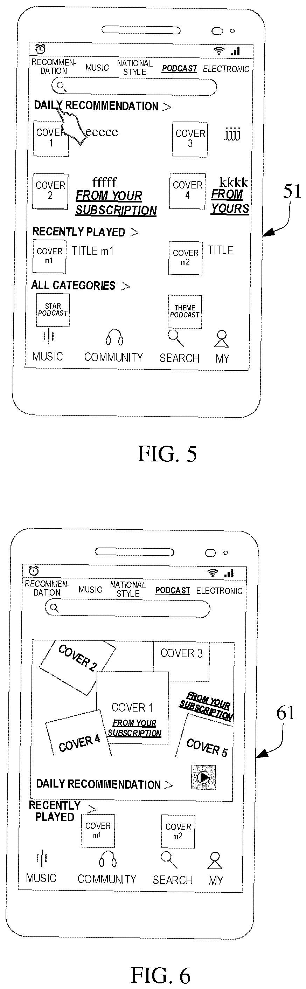

Referring to FIG. 5, a media interface such as 51, a recommendation identification may be "daily recommendation", recommended media content exists in the form of a cover and a title, and a playback button is not set, and the user may play corresponding recommended media content by touching the cover or title. In addition, the scrolling effect is removed from the media interface, and the user may slide the media interface left or right, to display more recommended media content. If the user triggers the recommendation identification, the second amount of recommended media content may be displayed. For example, referring to FIG. 5 and FIG. 4, the "daily recommendation" in FIG. 5 is triggered, and the page 41 displayed shown in FIG. 4 may be jumped to.

Further, referring to FIG. 5, under the recommendation identification and the recommended media content, the recently played media content and other types of media content may be displayed.

In addition, for the two media interfaces shown in FIG. 1 and FIG. 5, the subscribed description is displayed at the cover position of the recommended media content, and the subscribed description represents that the recommended media content corresponding to the cover is the subscribed media content. First, referring to FIG. 5, for the list type recommendation mode, the subscribed description "from your subscription" is displayed next to the corresponding cover. Referring to FIG. 1, for a card type recommendation method, if the first amount of recommended media content displayed is all subscribed media content, the subscribed description may be displayed at a predetermined position to represent that the first amount of recommended media content is all subscribed media contents. Referring to FIG. 6, for the card type recommendation mode, if the displayed recommended media content part is the subscribed media content, then the subscribed description may be displayed beside the cover or on the cover to represent that the corresponding recommended media content is the subscribed media content. As shown in FIG. 6, "from your subscription" is displayed on the cover 1 to represent that the recommended media content corresponding to the cover 1 is the subscribed media content, and "from your subscription" is displayed next to the cover 5 to represent that the recommended media content corresponding to the cover 5 is the subscribed media content.

In addition, for the two forms shown in FIG. 1 and FIG. 5, the method further includes: receiving a third operation instruction for a cover; and in response to the third operation instruction, playing recommended media content corresponding to a cover being operated.

In the present disclosure, the third operation instruction may be a triggering instruction, and the user may trigger the cover to play the corresponding recommended media content. For example, for the target card K in FIG. 1, the user may select triggering any one of the cover 1 to the cover 5 to play the corresponding recommended media content. In another example, for any cover in FIG. 5, the user may trigger to play the corresponding recommended media content. In addition, the user may also trigger the title to play the corresponding recommended media content. According to the method of the present disclosure, the setting of the playback control of each recommended media content may be omitted, so that the simplicity of the media interface is improved, and which is convenient for the user to operate.

In addition, if the triggered recommended media content has been played, then after triggering the corresponding cover, it continues to be played based on the already played part. Further, the user may trigger the title to display detailed content of the recommended media content, such as author, post date, keyword, and the like.

Further, the method further includes: receiving a fourth operation instruction for the recommendation identification; and in response to the fourth operation instruction, displaying a second amount of recommended media content based on a list manner, the second amount being greater than the first amount.

As an example, for the media interface shown in FIG. 1, the user may trigger the recommendation identification "today's recommendation", to jump to the page 41 shown in FIG. 4, and the second amount of recommended media content is displayed. For the media interface shown in FIG. 5, the user may trigger the recommendation identification "today's recommendation", or may jump to the page 41 shown in FIG. 4, and the second amount of recommended media content is displayed. The queue logic for displaying the second amount of recommended media content is unchanged with respect to the queue logic of the first amount of recommended media content on the media interface. For example, on the media interface, the first amount of recommended media content is arranged according to a sequence of the cover 1 to the cover 5, and then in page 41 it is also arranged according to a sequence of the cover 1 to the cover 5, and then other recommended media content is arranged.

In this embodiment, by receiving a start instruction for a media interface of a target application; and in response to the start instruction, displaying, on the media interface, a recommendation identification and a first amount of recommended media content corresponding to the recommendation identification, the recommended .media content being preferred media content of a user, wherein for recommended media content subscribed by the user, a subscribed description is displayed on the media interface, the preferred media content of the user can be recommended on the media interface, and the recommended media content subscribed by the user is described, to cause the user to quickly search for the recommended media content subscribed.

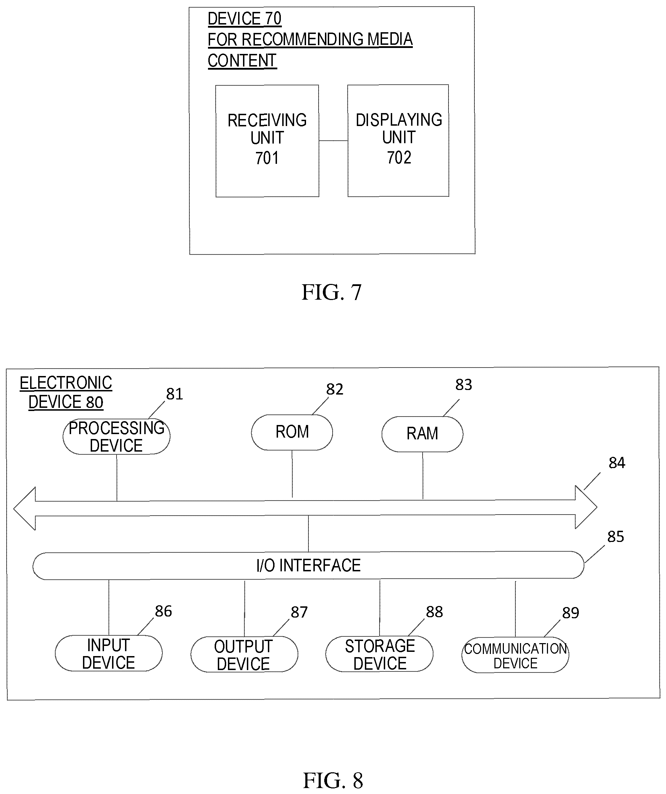

Corresponding to the method for recommending media content in the foregoing embodiment, FIG. 7 is a block diagram of a structure of a device 70 for recommending media content provided by embodiments of the present disclosure. For ease of illustration, only portions related to embodiments of the present disclosure are shown. Referring to FIG. 7, the device for recommending media content includes a receiving unit 701 and a displaying unit 702, where:
A receiving unit 701 is configured to receive a starting instruction for a media interface of a target application;
A displaying unit 702 is configured to in response to the start instruction, display, on the media interface, a recommendation identification and a first amount of recommended media content corresponding to the recommendation identification, the recommended media content being a preferred media content of a user, wherein for recommended media content subscribed by the user, a subscribed description is displayed on the media interface.

In some embodiments, the displaying unit 702 is specifically configured to: display a target card on the media interface, the target card comprising a cover of the first amount of recommended media content and the recommendation identification displayed based on a predetermined typography manner.

In some embodiments, the predetermined typography manner comprises: wherein a cover of one of recommended media content is displayed at a central position in the target card, and a cover of other recommended media content is displayed at a peripheral position of the target card.

In some embodiments, the displaying unit 702 is further configured to: display the subscribed description at a predetermined position of the target card, the subscribed description representing that the first amount of recommended media content is the subscribed media content, and the predetermined position and the cover not overlapping.

In some embodiments, the target card further comprises a playback control, and the device for recommending media content further includes a playback unit (not shown), and the receiving unit 701 is configured to receiving a first operation instruction for the playback control; and the playback unit is configured to in response to the first operation instruction, play recommended media content corresponding to the recommendation identification based on a predetermined order.

In some embodiments, after in response to the start instruction, displaying, on the media interface, a recommendation identification and a plurality of recommended media content corresponding to the recommendation identification, the receiving unit is further configured to: receive a second operation instruction excluding the playback control in the target card; and the displaying unit 702 is further configured to: in response to the second operation instruction, display a second amount of recommended media content based on a list manner, the second amount being greater than the first amount.

In some embodiments, the displaying unit 702 is specifically configured to: display the recommendation identification on the media interface, and display, under the recommendation identification, the first amount of recommended media content in a list form, the recommended media content comprising: a cover of the recommended media content and a title of recommended media content.

In some embodiments, the displaying unit 702 is specifically configured to: display a subscribed description on the media interface, and the subscribed description representing that the recommended media content corresponding to a cover is the subscribed media content.

In some embodiments, the receiving unit 701 is further configured to: receive a third operation instruction for a cover; and the playback unit is further configured to: in response to the third operation instruction, play recommended media content corresponding to a cover being operated.

In some embodiments, the receiving unit 701 is further configured to: receive a fourth operation instruction for the recommendation identification, and the displaying unit 702 is specifically configured to: in response to the fourth operation instruction, display a second amount of recommended media content based on a list manner, the second amount being greater than the first amount.

The device for recommending media content provided by this embodiment may be configured to perform the technical solutions of the embodiments of foregoing method for recommending media content, and its implementation principles and technical effects are similar, and details are not described here again in this embodiment.

Reference is made to FIG. 8, which shows a schematic diagram of a structure of an electronic device 80 appliable for implementing embodiments of the present disclosure, and the electronic device 80 may be a terminal device or a server. The terminal device may include, but are not limited to, mobile phones, notebook computers, digital broadcast receivers, personal digital assistant (PDA), portable Android device (PAD), portable multimedia player (PMP), vehicle-mounted terminals (such as vehicle-mounted navigation terminals), etc., as well as fixed terminals such as digital television (TV), desktop computers, etc. The electronic device shown in FIG. 8 is only an example, and should not limit the function and application range of embodiments of the present disclosure.

As shown in FIG. 8, the electronic device 80 may include a processing device (such as a central processing unit, a graphics processing unit, or the like) 81 that may perform various appropriate actions and processing according to a program stored in a read only memory (ROM) 82 or a program loaded from a storage device 88 into a random access memory (RAM) 83. In the RAM 83, various programs and data required for operation of the electronic device 80 are further stored. The processing device 81, the ROM 82, and the RAM 83 are connected to each other by using a bus 84. An input/output (I/O) interface 85 is also connected to the bus 84.

Generally, the following devices may be connected to the I/O interface 85: input device 86 including, for example, a touchscreen, a touchpad, a keyboard, a mouse, a camera, a microphone, an accelerometer, and a gyroscope; output device 87 including, for example, a liquid crystal display (LCD), a loudspeaker and a vibrator; storage device 88 including, for example, a tape or a hard disk; and a communication device 89. The communication device 89 may allow the electronic device 80 to communicate wirelessly or wiredly with another device to exchange data. Although FIG. 8 shows an electronic device 80 with various devices, it should be understood that it is not required to implement or provide all shown devices. Alternatively, more or fewer devices may be implemented or provided.

In particular, according to embodiments of the present disclosure, the process described above with reference to the flowchart may be implemented as a computer software program. For example, an embodiment of the present disclosure includes a computer software program product that includes a computer program carried on a computer readable medium, and the computer program includes program codes used to perform the methods shown in the flowchart. In such an embodiment, the computer program may be downloaded and installed from a network by using the communications device 89, or installed from the storage device 88, or installed from the ROM 82. When the computer program is executed by the processing device 81, the foregoing functions defined in the method in embodiments of the present disclosure are executed.

It should be noted that the foregoing computer-readable medium in the present disclosure may be a computer-readable signal medium, a computer-readable storage medium, or any combination of the two. The computer-readable storage medium may be, for example, an electrical, magnetic, optical, electromagnetic, infrared, or semiconductor system, apparatus, or means, or any combination thereof. More specific examples of the computer-readable storage medium may include but are not limited to: an electrical connection having one or more conducting wires, a portable computer disk, a hard disk, a random-access memory (RAM), a read only memory (ROM), an erasable programmable read only memory (EPROM or flash memory), an optical fiber, a portable compact disc read only memory (CD-ROM), an optical storage device, a magnetic storage device, or any suitable combination thereof. In the present disclosure, the computer-readable storage medium may be any tangible medium that includes or stores a program, and the program may be used by or in combination with an instruction execution system, apparatus, or means. In addition, in the present disclosure, the computer-readable signal medium may include a data signal propagated in a baseband or as a part of a carrier, which carries computer-readable program codes. Such a propagated data signal may be in multiple forms, including but not limited to an electromagnetic signal, an optical signal, or any suitable combination thereof. The computer-readable signal medium may further be any computer-readable medium other than the computer-readable storage medium, and the computer-readable signal medium may send, propagate, or transmit a program that is used by or in combination with an instruction execution system, apparatus, or means. The program code included in the computer-readable medium may be transmitted by using any suitable medium, including but not limited to: a wire, an optical cable, radio frequency (RF), or any suitable combination thereof.

The foregoing computer-readable medium may be included in the foregoing electronic device; it may also exist separately without being assembled into the electronic device .

The foregoing computer-readable medium carries one or more programs, when the foregoing one or more programs are executed by the electronic device, causing the electronic device to perform the method shown in the foregoing embodiments.

Computer program codes for performing the operations of the present disclosure may be written in one or more programming languages or a combination thereof, including object oriented programming languages, such as Java, Smalltalk, C++, and conventional procedural programming languages such as "C" or similar program design languages. The program codes may be executed completely on a user computer, partially on a user computer, as an independent package, partially on a user computer and partially on a remote computer, or completely on a remote computer or server. In cases involving a remote computer, the remote computer may be connected to a user computer through any type of network, including a local area network (LAN) or a wide area network (WAN), or may be connected to an external computer (for example, through the Internet by using an Internet service provider).

The flowcharts and block diagrams in the accompanying drawings illustrate possible architectures, functions, and operations of systems, methods, computer program products and computer programs according to various embodiments of the present disclosure. In this regard, each block in a flowchart or block diagram may represent a unit, program segment, or part of code that includes one or more executable instructions for implementing a specified logical function. It should also be noted that in some alternative implementations, functions marked in the block may also occur in different order than those marked in the accompanying drawings. For example, two blocks represented in succession may actually be executed in substantially parallel, and they may sometimes be executed in a reverse order, depending on the functions involved. It should also be noted that each block in the block diagram and/or flowchart and a combination of blocks in the block diagram and/or flowchart may be implemented by using a dedicated hardware-based system that performs a specified function or operation, or may be implemented by using a combination of dedicated hardware and a computer instruction.

The units involved in embodiments described in the present disclosure may be implemented either by means of software or by means of hardware. The names of these units do not limit the units themselves under certain circumstances, for example, the first obtaining unit may be further described as "a unit for obtaining at least two Internet Protocol addresses".

The functions described above herein may be performed, at least in part, by one or more hardware logic components. For example, and without limitation, example types of hardware logic components that may be used include: field programmable gate arrays (FPGAs), application specific integrated circuits (ASICs), application specific standard part (ASSP), systems on-a-chip (SOC), complex programmable logical device (CPLD) and so on.

In the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. Machine-readable media may include, but are not limited to, electronic, magnetic, optical, electromagnetic, infrared, or semiconductor systems, apparatus or device, or any suitable combination of the foregoing. More specific examples of machine-readable storage media would include one or more wire-based electrical connection, portable computer disks, hard disks, random access memory (RAM), read only memory (ROM), erasable programmable read only memory (EPROM) or flash memory, optical fiber, portable compact disc read-only memory (CD-ROM), optical storage device, magnetic storage device, or any suitable combination of the foregoing content.

In a first aspect, a method for recommending media content is provided according to one or more embodiments of the present disclosure, comprising: receiving a start instruction for a media interface of a target application; and in response to the start instruction, displaying, on the media interface, a recommendation identification and a first amount of recommended media content corresponding to the recommendation identification, the recommended media content being preferred media content of a user, wherein for recommended media content subscribed by the user, a subscribed description is displayed on the media interface.

According to one or more embodiments of the present disclosure, displaying on the media interface, a recommendation identification and a first amount of recommended media content corresponding to the recommendation identification comprises: displaying a target card on the media interface, the target card comprising a cover of the first amount of recommended media content and the recommendation identification displayed based on a predetermined typography manner.

According to one or more embodiments of the present disclosure, the predetermined typography manner comprises: wherein a cover of one of recommended media content is displayed at a central position in the target card, and a cover of other recommended media content is displayed at a peripheral position of the target card.

According to one or more embodiments of the present disclosure, further comprising: displaying the subscribed description at a predetermined position of the target card, the subscribed description representing that the first amount of recommended media content is the subscribed media content, and the predetermined position and the cover not overlapping.

According to one or more embodiments of the present disclosure, the triggering condition of the bad point detection instruction comprises: starting the camera for the first time; and/or operation instruction for the bad point detection control by the user.

According to one or more embodiments of the present disclosure, the target card further comprises a playback control, and wherein after in response to the start instruction, displaying, on the media interface, a recommendation identification and a first amount of media content corresponding to the recommendation identification, the method further comprises: receiving a first operation instruction for the playback control; and in response to the first operation instruction, playing recommended media content corresponding to the recommendation identification based on a predetermined order.

According to one or more embodiments of the present disclosure, after in response to the start instruction, displaying, on the media interface, a recommendation identification and a plurality of recommended media content corresponding to the recommendation identification, the method further comprises: receiving a second operation instruction excluding the playback control in the target card; and in response to the second operation instruction, displaying a second amount of recommended media content based on a list manner, the second amount being greater than the first amount.

According to one or more embodiments of the present disclosure, displaying, on the media interface, a recommendation identification and a first amount of recommended media content corresponding to the recommendation identification comprises: displaying the recommendation identification on the media interface, and displaying, under the recommendation identification, the first amount of recommended media content in a list form, the recommended media content comprising: a cover of the recommended media content and a title of recommended media content.

According to one or more embodiments of the present disclosure, a subscribed description is displayed on the media interface, and the subscribed description representing that the recommended media content corresponding to a cover is the subscribed media content.

According to one or more embodiments of the present disclosure, the method further comprises: receiving a third operation instruction for a cover; and in response to the third operation instruction, playing recommended media content corresponding to a cover being operated.

According to one or more embodiments of the present disclosure, the method further comprises: receiving a fourth operation instruction for the recommendation identification; and in response to the fourth operation instruction, displaying a second amount of recommended media content based on a list manner, the second amount being greater than the first amount.

In a second aspect, a device for recommending media content is provided according to one or more embodiments of the present disclosure, comprising:
A receiving unit configured to receive a starting instruction for a media interface of a target application;
A displaying unit configured to in response to the start instruction, display, on the media interface, a recommendation identification and a first amount of recommended media content corresponding to the recommendation identification, the recommended media content being a preferred media content of a user, wherein for recommended media content subscribed by the user, a subscribed description is displayed on the media interface.

In a third aspect, an electronic device is provided according to one or more embodiments of the present disclosure, including: comprising: at least one processor and a memory;
the memory storing computer executable instructions;
the at least one processor executing thecomputer executable instructions stored in the memory, so that the at least one processor executes the method for recommending media content provided by the first aspect or the method for recommending media content provided by the second aspect.

In a fourth aspect, a computer-readable storage medium is provided according to one or more embodiments of the present disclosure, the computer readable storage medium storing computer executable instructions, when a processor executes the computer executable instructions, implementing the method for recommending media content provided by the first aspect.

In a fifth aspect, a computer program product is provided according to one or more embodiments of the present disclosure, the computer program product comprising a computer program, wherein the computer program comprises computer executable instructions, and when a processor executes the computer executable instructions, implementing the method for recommending media content provided by the first aspect.

In a sixth aspect, a computer program is provided according to one or more embodiments of the present disclosure, comprising computer executable instructions, when a processor executes computer executable instructions, implementing the method for recommending media content provided by the first aspect.

The above description is only embodiments of the present disclosure and an illustration of the technical principles utilized. It should be understood by those skilled in the art that the scope of disclosure involved in the present disclosure is not limited to technical solutions formed by a particular combination of the above technical features, but also covers other technical solutions formed by any combination of the above technical features or their equivalent features without departing from the above disclosed concept, for example, a technical solution formed by interchanging the above features with (but not limited to) technical features with similar functions disclosed in the present disclosure.

Further, although the operations are depicted using a particular order, this should not be construed as requiring that the operations be performed in the particular order shown or in sequential order of execution. Multitasking and parallel processing may be advantageous in certain environments. Similarly, while several specific implementation details are included in the above discussion, these should not be construed as limiting the scope of the present disclosure. Certain features described in the context of separate embodiments may also be implemented in combination in a single embodiment. Conversely, various features described in the context of a single embodiment may also be implemented in multiple embodiments, either individually or in any suitable sub-combination.

Although the present subject has been described using language specific to structural features and/or method logical actions, it should be understood that the subject limited in the appended claims is not necessarily limited to the particular features or actions described above. Rather, the particular features and actions described above are merely example forms of implementing the claims.

## Claims

1. A method for recommending media content, comprising:
receiving a start instruction for a media interface of a target application;
in response to the start instruction, displaying, on the media interface, a recommendation identification and a first amount of recommended media content corresponding to the recommendation identification, the recommended media content being preferred media content of a user, wherein for recommended media content subscribed by the user, a subscribed description is displayed on the media interface.

2. The method for recommending media content of claim 1, wherein displaying, on the media interface, a recommendation identification and a first amount of recommended media content corresponding to the recommendation identification comprises:
displaying a target card on the media interface, the target card comprising a cover of the first amount of recommended media content and the recommendation identification displayed based on a predetermined typography manner.

3. The method for recommending media content of claim 2, wherein the predetermined typography manner comprises: wherein a cover of one of recommended media content is displayed at a central position in the target card, and a cover of other recommended media content is displayed at a peripheral position of the target card.

4. The method for recommending media content of claim 2, further comprising: displaying the subscribed description at a predetermined position of the target card, the subscribed description representing that the first amount of recommended media content is the subscribed media content, and the predetermined position and the cover not overlapping.

5. The method for recommending media content of any of claims 2-4, wherein the target card further comprises a playback control, and wherein after in response to the start instruction, displaying, on the media interface, a recommendation identification and a first amount of media content corresponding to the recommendation identification, the method further comprises:
receiving a first operation instruction for the playback control;
in response to the first operation instruction, playing recommended media content corresponding to the recommendation identification based on a predetermined order

6. The method for recommending media content of claim 5, wherein after in response to the start instruction, displaying, on the media interface, a recommendation identification and a plurality of recommended media content corresponding to the recommendation identification, the method further comprises:
receiving a second operation instruction excluding the playback control in the target card;
in response to the second operation instruction, displaying a second amount of recommended media content based on a list manner, the second amount being greater than the first amount.

7. The method for recommending media content of claim 1, wherein displaying, on the media interface, a recommendation identification and a first amount of recommended media content corresponding to the recommendation identification comprises:
displaying the recommendation identification on the media interface, and displaying, under the recommendation identification, the first amount of recommended media content in a list form, the recommended media content comprising: a cover of the recommended media content and a title of recommended media content.

8. The method for recommending media content of any of claims 1-3 and 7, wherein a subscribed description is displayed on the media interface, and the subscribed description representing that the recommended media content corresponding to a cover is the subscribed media content.

9. The method for recommending media content of claim 6, further comprising:
receiving a third operation instruction for a cover;
in response to the third operation instruction, playing recommended media content corresponding to a cover being operated.

10. The method for recommending media content of claim 9, further comprising:
receiving a fourth operation instruction for the recommendation identification;
in response to the fourth operation instruction, displaying a second amount of recommended media content based on a list manner, the second amount being greater than the first amount.

11. A device for recommending media content, comprising:
a receiving unit configured to receive a starting instruction for a media interface of a target application;
a displaying unit configured to in response to the start instruction, display, on the media interface, a recommendation identification and a first amount of recommended media content corresponding to the recommendation identification, the recommended media content being a preferred media content of a user, wherein for recommended media content subscribed by the user, a subscribed description is displayed on the media interface.

12. An electronic device, comprising: at least one processor and a memory;
the memory storing computer executable instructions;
the at least one processor executing thecomputer executable instructions stored in the memory, so that the at least one processor executes the method for recommending media content of any of claims 1-10.

13. A computer readable storage medium, the computer readable storage medium storing computer executable instructions, when a processor executes the computer executable instructions, implementing the method for recommending media content of any of claims 1-10.

14. A computer program product, comprising a computer program, wherein the computer program comprises computer executable instructions, and when a processor executes the computer executable instructions, implementing the method for recommending media content of any of claims 1-10.

15. A computer program, comprising computer executable instructions, when a processor executes computer executable instructions, implementing the method for recommending media content of any of claims 1-10.
